# EUROPÄISCHE PATENTANMELDUNG

(11) **EP 2 653 261 A1**
(43) Veröffentlichungstag der Anmeldung: **23.10.2013**
(21) Anmeldenummer: 13164503.8
(22) Anmeldetag: 19.04.2013
(51) Int. Cl.: B23Q 3/06, B25B 1/24

(54) **Einspannvorrichtung und Verfahren zur Bearbeitung eines Rohlings unter Verwendung einer derartigen Einspannvorrichtung**

(30) Priorität: 20.04.2012 DE 102012103529
(71) Anmelder: RIW-Maschinenbau GmbH, 47119 Duisburg (DE)
(72) Erfinder: Ducharme, Daniel, 47119 Duisburg (DE)
(74) Vertreter: Michalski Hüttermann & Partner Patentanwälte

(57) **Zusammenfassung**

Gegenstand der vorliegenden Erfindung ist eine Einspannvorrichtung zur Verwendung bei der Bearbeitung eines Rohlings (10), insbesondere eines Rohlings (10) zur Herstellung eines Bremsbackenteils (70), mit zumindest einem ersten vorgesehenen Merkmal, dessen exakte Lage nur relativ zu einem zweiten vorgesehenen Merkmal des Rohlings (10) festlegbar ist, das an dem einzuspannenden Rohling (10) unbestimmbar ist.

Die Einspannvorrichtung umfasst zwei Grundkörper (40, 42) und eine Verstelleinrichtung zur linearen Verstellung zumindest eines der zwei Grundkörper (40, 42) in zumindest einer Verstellrichtung (56). Weiterhin weist die Einspannvorrichtung zumindest zwei Spannbacken (48, 50) auf, wobei jeder der Grundkörper (40, 42) mit zumindest einer der zwei Spannbacken (48, 50) ausgestattet ist, und wobei sich die Spannbacken (48, 50) paarweise in der Verstellrichtung (56) gegenüberstehen und im Wesentlichen eine Erstreckungsrichtung (52, 54) aufweisen, die senkrecht zur Verstellrichtung (56) angeordnet ist.

Ferner definiert jede der Spannbacken (48, 50) an jedem der beiden Grundkörper (40, 42) mit einer der Spannbacke (48, 50) zugewandten Fläche (62) des Grundkörpers (40, 42) zumindest einen Raum (64) definiert, der in zumindest einem Betriebszustand zu einer zumindest teilweisen Aufnahme eines spanenden Werkzeugs vorgesehen ist.

## Beschreibung

Die vorliegende Erfindung betrifft eine Einspannvorrichtung gemäß dem Gegenstand des unabhängigen Anspruchs 1 sowie ein Verfahren zur Bearbeitung eines Rohlings unter Verwendung einer derartigen Einspannvorrichtung gemäß dem Anspruch 9.

### Stand der Technik

Die Erfindung geht aus von einer Einspannvorrichtung nach dem Oberbegriff des Anspruchs 1.

Bei der Bearbeitung von Rohlingen liegt häufig eine Situation vor, in der der Rohling ein erstes vorgesehenes Merkmal aufweist, dessen exakte Lage nur relativ zu einem zweiten vorgesehenen Merkmal des Rohlings festlegbar ist, das jedoch an dem einzuspannenden Rohling noch unbestimmbar ist. Nach dem bisherigen Stand der Technik war es erforderlich, zunächst das zweite vorgesehene Merkmal des Rohlings auszuformen, um anschließend die exakte Lage des ersten vorgesehenen Merkmals relativ zum zweiten Merkmal zu bestimmen. Dazu sind eine Abfolge von Ein- und Umspannvorgängen und Justierungen erforderlich, die zeitaufwändig sind und sich in hohen Stückkosten niederschlagen.

### Offenbarung der Erfindung

Gegenstand der vorliegenden Erfindung ist eine Einspannvorrichtung zur Verwendung bei der Bearbeitung eines Rohlings, insbesondere eines Rohlings zur Herstellung eines Bremsbackenteils, mit zumindest einem ersten vorgesehenen Merkmal, dessen exakte Lage nur relativ zu einem zweiten vorgesehenen Merkmal des Rohlings festlegbar ist, das an dem einzuspannenden Rohling unbestimmbar ist.

Die erfindungsgemäße Einspannvorrichtung umfasst zwei Grundkörper und eine Verstelleinrichtung zur linearen Verstellung zumindest eines der zwei Grundkörper in zumindest einer Verstellrichtung. Weiterhin weist die Einspannvorrichtung zumindest zwei Spannbacken auf, wobei jeder der Grundkörper mit zumindest einer der zwei Spannbacken ausgestattet ist, und wobei sich die Spannbacken paarweise in der Verstellrichtung gegenüberstehen und im Wesentlichen eine Erstreckungsrichtung aufweisen, die senkrecht zur Verstellrichtung angeordnet ist. Unter "im Wesentlichen" soll in dieser Anmeldung im Zusammenhang mit Richtungen, mit Parallelität und mit Neigungen von Ebenen insbesondere verstanden werden, dass eine Winkelabweichung von der bezeichneten Richtung, Parallelität oder Ebenenneigung vorteilhaft geringer ist als 20°, bevorzugt geringer als 15° und, besonders bevorzugt, geringer als 10°.

Ferner definiert jede der Spannbacken an jedem der beiden Grundkörper mit einer der Spannbacke zugewandten Fläche des Grundkörpers zumindest einen Raum, der in zumindest einem Betriebszustand zu einer zumindest teilweisen Aufnahme eines spanenden Werkzeugs vorgesehen ist. Unter einem "von Objekten definierten Raum" soll insbesondere ein Volumen verstanden werden, das von einer Gesamtheit von Raumpunkten gebildet ist, die als Schnittpunkte von gedachten Strahlen entstehen, die von Punkten von Oberflächen der Objekte ausgehen, die den Raum definieren, wobei die Strahlen senkrecht zur jeweiligen Oberfläche des Objekts angeordnet sind.

Eine derartig ausgebildete Einspannvorrichtung kann eine Formgebung der beiden vorgesehenen Merkmale des Rohlings ermöglichen, ohne dass ein weiterer Ein- bzw. Umspannvorgang notwendig ist. Dadurch können Rüstzeiten eingespart und Herstellungskosten für die Bearbeitung des Rohlings herabgesetzt werden.

Wenn jeder der zwei Grundkörper mit zumindest zwei Spannbacken ausgestattet ist, die in einer Richtung senkrecht zur Verstellrichtung und senkrecht zur Erstreckungsrichtung voneinander beabstandet an je einer der Spannbacken jedes Grundkörpers angeordnet sind, kann eine Bearbeitung von zwei Rohlingen nach einem einzigen Einspannvorgang erfolgen, wodurch die Herstellungskosten besonders stark gesenkt werden können.

Weiterhin wird vorgeschlagen, dass die Spannbacken einstückig an den Grundkörpern angeformt sind, wodurch eine besonders hohe mechanische Festigkeit erreicht werden kann, die eine hohe Präzision der Bearbeitung ermöglichen kann. Unter "einstückig" soll in diesem Zusammenhang insbesondere stoffschlüssig verbunden, wie beispielsweise durch einen Schweißprozess oder einen anderen, dem Fachmann geläufigen Prozess, und, besonders vorteilhaft, angeformt verstanden werden, wie durch die Herstellung mittels eines Guss- oder Schmiedeverfahrens.

Vorteilhaft weisen die Spannbacken in der Richtung senkrecht zur Verstellrichtung und senkrecht zur Erstreckungsrichtung eine Breite aufweisen, die weniger als 20 % einer Breite des Grundkörpers in dieser Richtung beträgt. Dadurch kann eine kompakte Anordnung der Einspannvorrichtung in einem Betriebszustand mit eingespannten Rohlingen erzielt werden.

Wenn eine Abmessung des definierten Raums in der Verstellrichtung mindestens 15 mm beträgt, kann vorteilhaft eine Verwendung einer Vielzahl von bekannten spannenden Werkzeugen für die Bearbeitung des Rohlings eingesetzt werden. Bei einer geeigneten Auslegung kann das spanende Werkzeug eine Bearbeitungsfläche bearbeiten, die bis zu einem Rand des Rohlings reicht.

Zudem wird vorgeschlagen, dass die Spannbacken jeweils zumindest eine Vertiefung mit zumindest einem Flankenelement aufweisen, das zumindest eine Anlagefläche zur Anlage des Rohlings ausbildet. Dadurch kann vorteilhaft eine präzise und zuverlässige Halterung des Rohlings durch die Einspannvorrichtung erzielt werden.

Mit besonderem Vorteil sind die Spannbacken innerhalb eines Randbereichs des Grundkörpers angeordnet. Unter einem "Randbereich des Grundkörpers" soll in diesem Zusammenhang insbesondere eine Strecke verstanden werden, die senkrecht zur Verstellrichtung und senkrecht zur Erstreckungsrichtung angeordnet ist und deren Länge weniger als ein Drittel der in dieser Richtung bestimmten Breite des Grundkörpers beträgt. Dadurch können bei einem Einspannen von mehr als einem Rohling in der Einspannvorrichtung besonders günstige Drehmomentverhältnisse erreicht werden, die zu einer guten Halterung der Rohlinge führen können.

Wenn die die Grundkörper zur Verwendung mit einer hydraulischen oder pneumatischen Festlegevorrichtung geeignet sind, können vorteilhaft auch größere Rohlinge, insbesondere Rohlinge zur Herstellung von Bremsbackenteilen für Bremsen mit hoher Bremsleistung, in der Einspannvorrichtung bearbeitet werden.

Die vorliegende Erfindung ist weiterhin auf ein Verfahren zur Bearbeitung eines Rohlings gerichtet, insbesondere zur Bearbeitung eines Rohlings zur Herstellung eines Bremsbackenteils, mit zumindest einem ersten Merkmal, dessen exakte Lage nur relativ zu einem zweiten Merkmal festlegbar ist, das an dem einzuspannenden Rohling unbestimmbar ist, wobei der Rohling in einer der aus- und weitergestalteten Einspannvorrichtungen eingespannt wird.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1a einen unbearbeiteten Rohling zur Herstellung eines Bremsbackenteils,
Fig. 1b ein aus dem Rohling gemäß der Fig. 1a fertig bearbeitetes Bremsbackenteil,
Fig. 2 eine erste, trommelförmige Einspannvorrichtung gemäß dem bisherigen Stand der Technik mit eingespannten Rohlingen,
Fig. 3 eine weitere Spannvorrichtung gemäß dem bisherigen Stand der Technik,
Fig. 4 eine erfindungsgemäße Einspannvorrichtung mit zwei Grundkörpern, einem Rohling und einem Bremsbackenteil in einem eingespannten Zustand in einer Ansicht von schräg oben, und
Fig. 5 eine Detailansicht der Einspannvorrichtung gemäß der Fig. 4.

### Beschreibung des Ausführungsbeispiels

Die Erfindung wird im Folgenden an einem Ausführungsbeispiel erläutert, bei dem ein Rohling 10 zur Herstellung eines Bremsbackenteils 70 für ein Hebezeug bearbeitet wird.

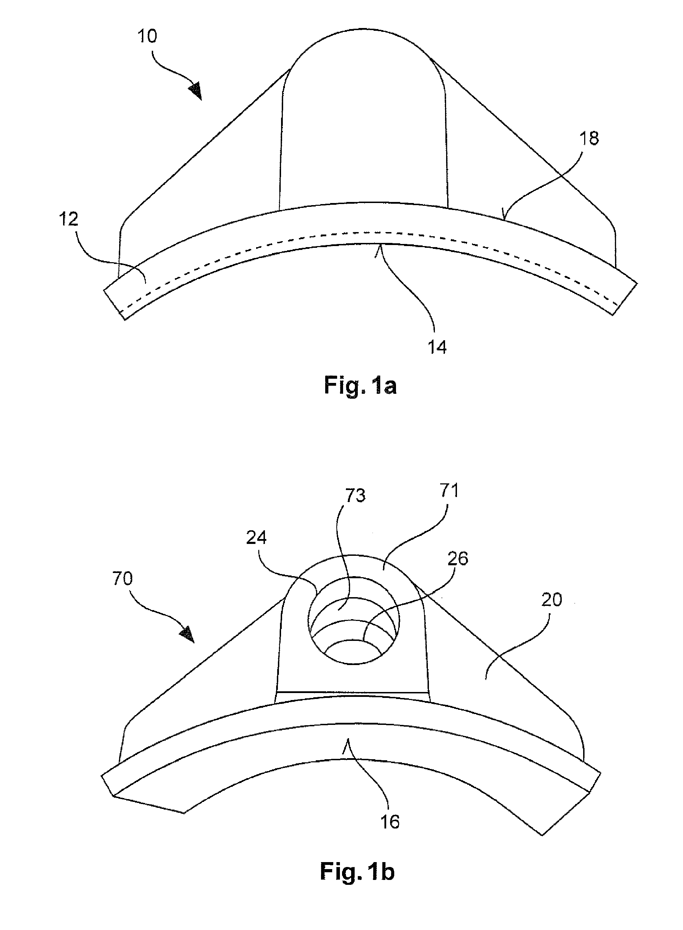

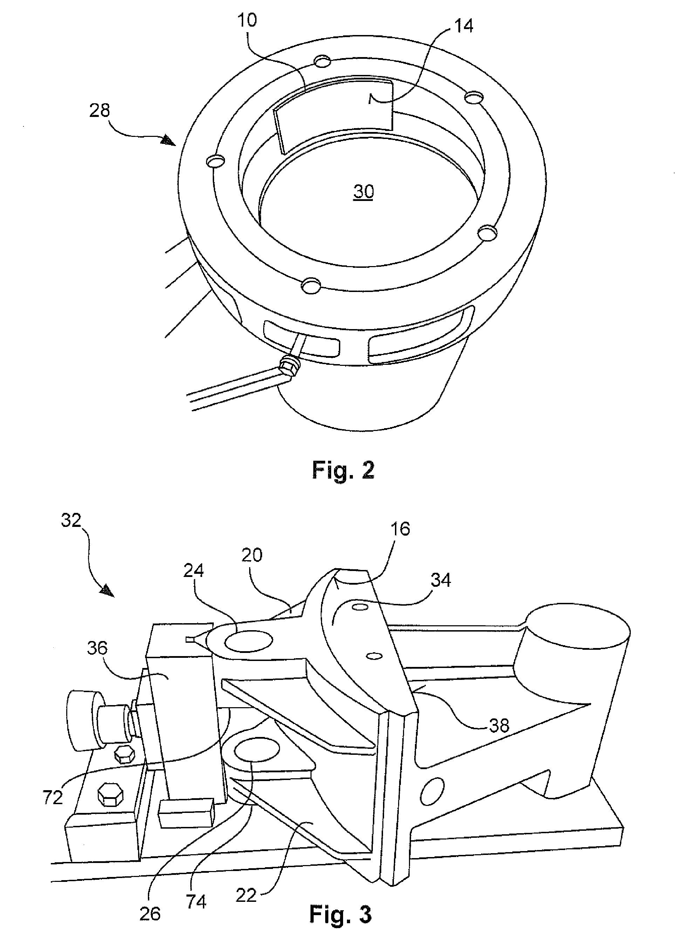

Der Rohling 10, der aus Aluminiumguss besteht, ist in Fig. 1 a gezeigt. Fig. 1 b zeigt das fertiggestellte Bremsbackenteil 70 nach erfolgter Bearbeitung. Der Rohling 10 weist ein Backenteil 12 mit einer konkav geformten Außenfläche 14 auf, die nach der Bearbeitung als eine Bremsbelaganlagefläche 16 vorgesehen und als Teil einer Mantelfläche eines geraden Kreiszylinders mit einem Durchmesser von 270 mm betrachtet werden kann. Auf einer konvex geformten Gegenseite 18 der Außenfläche 14 des Backenteils 12 sind in radialer Richtung, der Bremsbelaganlagefläche 16 abgewandt, zwei Stege 20, 22 angeordnet (Fig. 3), die parallel zueinander und in Richtung einer Mittellinie des Kreiszylinders beabstandet angeordnet sind. Die Stege 20, 22 sind mit dem Backenteil 12 stoffschlüssig verbunden (Fig. 1 b).

Jeder der Stege 20, 22 weist in einem fertiggestellten Zustand eine durchgehende Ausnehmung 24, 26 auf, die als H7-Passungsbohrung ausgebildet und zur Aufnahme eines Bolzens vorgesehen ist. In senkrecht zu den Passungsbohrungen angeordneten Ebenen sind die fertiggestellten Stege 20, 22 mit Anlageflächen 71, 72, 73, 74 ausgestattet.

Der Rohling 10 des Bremsbackenteils der Fig. 1 a weist demnach vorgesehene Merkmale auf. Ein erstes vorgesehenes Merkmal ist durch die Ausnehmungen 24, 26 gegeben, deren exakte Lage nur relativ zu einem zweiten vorgesehenen Merkmal des Rohlings 10 festlegbar ist. Das zweite vorgesehene Merkmal ist von der Bremsbelaganlagefläche 16 gebildet, die bei dem Rohling 10 unterhalb der konkav geformten Außenfläche 14 des Backenteils 12 verläuft und an dem einzuspannenden Rohling unbestimmbar ist. Ein Verlauf der Bremsbelaganlagefläche 16 im Rohling 10 ist in der Fig. 1 a durch eine gestrichelte Linie angedeutet.

Bei einer Bearbeitung nach dem bisherigen Stand der Technik werden die Stege 20, 22 zunächst mit Hilfsausnehmungen von geringerem Durchmesser als die vorgesehenen Ausnehmungen 24, 26 versehen, wobei deren Position ungefähr der exakten, vorgesehenen Lage der Ausnehmungen 24, 26 entspricht. Wie Fig. 2 zeigt, wird der auf diese Weise vorbereitete Rohling 10 mittels der Hilfsausnehmungen an eine erste, trommelförmige Spannvorrichtung 28 gespannt, so dass von einer Innenseite 30 der ersten Spannvorrichtung 28 Zugang für ein Werkzeug zu der konkav geformten Außenfläche 14 des Backenteils 12 besteht. Die trommelförmige Spannvorrichtung 28 weist mehrere gleichartige Vorrichtungen zum Einspannen vorbereiteter Rohlinge 10 auf.

In einem nächsten Arbeitsschritt wird mit dem Werkzeug durch Spanen die Bremsbelaganlagefläche 16 der Rohlinge 10 geformt.

Nach Entnahme aus der ersten, trommelförmigen Spannvorrichtung 28 wird der Rohling 10 in eine zweite Spannvorrichtung eingespannt (nicht dargestellt), in der durch Fräsen die Stege 20, 22 mit den Anlageflächen 71, 72, 73, 74 versehen werden können.

Nach Fertigstellung der Anlageflächen 71, 72, 73, 74 wird der Rohling aus der zweiten Einspannvorrichtung entnommen und in eine dritte Spannvorrichtung 32 eingespannt (Fig. 3), die eine Lehre 34 zur Anlage an die Bremsbelaganlagefläche 16 und ein in einer radialen Richtung verstellbares, senkrecht stehendes Prisma 36 als Gegenlager für die Stege 20, 22 aufweist. Eine Rückseite der an der Bremsbelaganlagefläche 16 anliegenden Lehre 34 bildet eine ebene Fläche 38 aus, so dass der Rohling 10 zwischen der ebene Fläche 38 und dem Prisma 36 eingespannt werden kann. Relativ zu der durch die Lehre 34 definierten Position der Bremsbelaganlagefläche 16 können nun die Hilfsausnehmungen zu an der exakten Position angeordneten Ausnehmungen 24, 26 erweitert werden.

Die erfindungsgemäße Einspannvorrichtung zur Verwendung bei der Bearbeitung des Rohlings 10 kann, wie im Folgenden beschrieben wird, durch einen vereinfachten Ablauf Rüstzeiten einsparen, die Anzahl von notwendigen Einspannvorrichtungen reduzieren und Herstellungskosten für die Bearbeitung des Rohlings 10 herabsetzen.

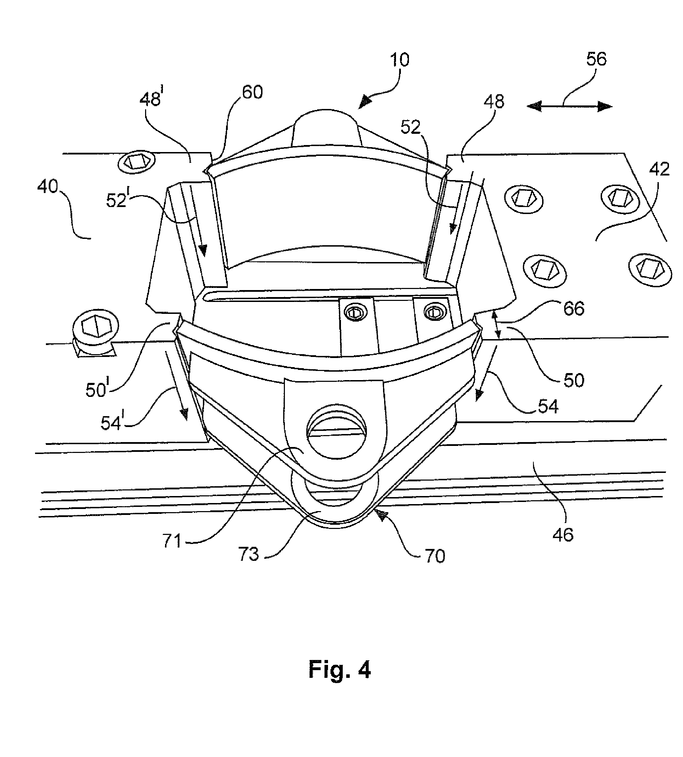

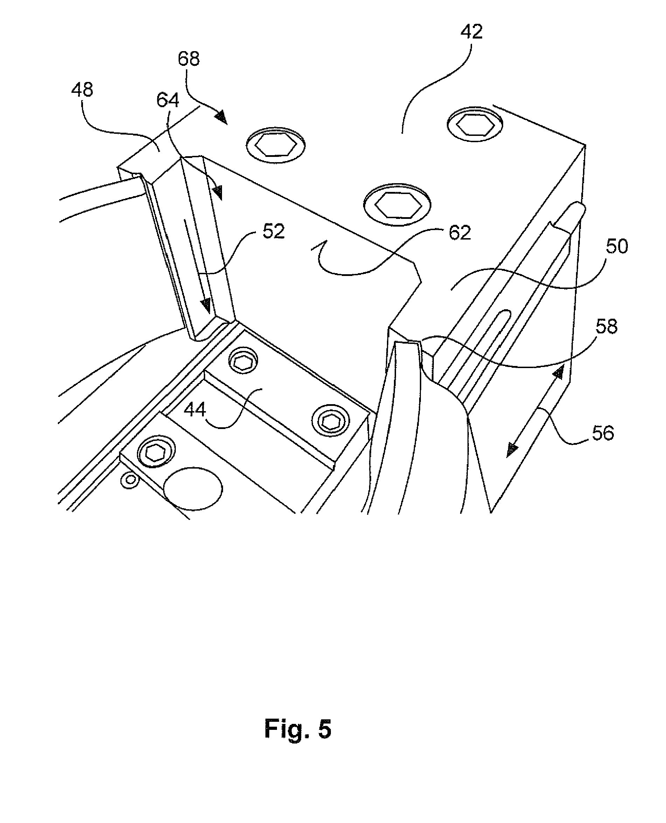

Die erfindungsgemäße Einspannvorrichtung ist in Fig. 4 dargestellt. Sie umfasst einen ersten Grundkörper 40, einen zweiten Grundkörper 42 und eine Verstelleinrichtung, die zur linearen Verstellung des zweiten Grundkörpers 42 in einer Verstellrichtung 56 vorgesehen ist. Dazu umfasst die Verstelleinrichtung einen Schlitten 44 (Fig. 5), mit dem der zweite Grundkörper 42 mittels eines bekannten Kurbeltriebs (nicht dargestellt) relativ zu dem auf einem Basisteil 46 der Einspannvorrichtung lösbar fest montierten ersten Grundkörper 40 bewegbar angeordnet ist. Die Einspannvorrichtung weist eine hydraulische Festlegevorrichtung auf, die über den Kurbeltrieb betätigt wird. Derartige hydraulische Festlegevorrichtungen sind dem Fachmann bekannt und sollen daher hier nicht näher beschrieben werden. Die Grundkörper 40, 42 sind hinsichtlich einer mechanischen Festigkeit auf eine Verwendung mit der hydraulischen Festlegevorrichtung und dabei auftretende Kräfte ausgelegt.

Jeder der zwei Grundkörper 40, 42 ist mit zwei Spannbacken 48, 50 ausgestattet, die einstückig an dem Grundkörper 40, 42 angeformt sind (Fig. 4). Die Spannbacken 48, 50 weisen jeweils eine Erstreckungsrichtung 52, 54 auf, die senkrecht zur Verstellrichtung 56 und senkrecht zum Schlitten 44 gerichtet ist. Dabei sind die Spannbacken 48, 50 senkrecht zur Verstellrichtung 56 und senkrecht zur Erstreckungsrichtung 52, 54 voneinander beabstandet an den Grundkörpern 40, 42 angeordnet.

Jeder Spannbacke 48, 50 eines der Grundkörper 40, 42 kann eine Spannbacke 48, 50 des anderen Grundkörpers 40, 42 zugeordnet werden, so dass sich einander zugeordnete Spannbacken 48, 50 paarweise in der Verstellrichtung 56 gegenüberstehen.

Die Fig. 4 zeigt die Einspannvorrichtung in einem Zustand mit einem zwischen den Spannbacken 48, 50 eingespannten Rohling 10 und einem Bremsbackenteil 70. Die Einspannbacken 48, 50 weisen jeweils eine V-förmige Vertiefung 58 mit zwei Flankenelementen 60 auf, die eine Anlagefläche zur Anlage des Rohlings 10 ausbilden und eine sichere Führung und Halterung des Rohlings 10 und des Bremsbackenteils 70 gewährleisten. Da ein so festgelegtes mechanisches System grundsätzlich überbestimmt ist, kann eine Vorsortierung hinsichtlich einer Abmessung von zu bearbeitenden Rohlingen 10 in der Verstellrichtung 56 erforderlich sein.

Wie in der Fig. 5 deutlich gezeigt ist, definiert jede der Spannbacken 48, 50 an jedem der beiden Grundkörper 40, 42 mit einer der Spannbacke 48, 50 zugewandten Fläche 62 des Grundkörpers einen Raum 64, der in dem in den Figuren 4 und 5 dargestellten Betriebszustand zu einer zumindest teilweisen Aufnahme eines spanenden Werkzeugs vorgesehen ist. Das nicht dargestellte, spanende Werkzeug ist von einem Fräswerkzeug gebildet und zu einer Formung von Bremsbelaganlageflächen 16 an den Rohlingen 10 vorgesehen.

Die Spannbacken 48, 50 weisen in der Richtung senkrecht zur Verstellrichtung 56 und senkrecht zur Erstreckungsrichtung 52, 54 eine Breite 66 auf, die weniger als 20 % einer Breite des Grundkörpers 40, 42 in dieser Richtung beträgt. Ferner sind die Spannbacken 48, 50 innerhalb eines Randbereichs 68 des Grundkörpers 10 angeordnet (Fig. 5), so dass ausreichend Platz zur Führung des spanenden Werkzeugs zwischen eingespannten Rohlingen 10 besteht.

In dem in den Figuren 4 und 5 dargestellten Betriebszustand der Einspannvorrichtung können mittels des spannenden Werkzeugs die Bremsbelaganlageflächen 16 der beiden eingespannten Rohlinge 10 geformt werden, wobei das spanende Werkzeug sich an einem Umkehrpunkt einer dazu notwendigen Bewegung teilweise innerhalb eines der definierten Räume 64 befindet, die in der Verstellrichtung 56 eine Abmessung von 20 mm aufweisen.

Die fertig geformten Bremsbelaganlageflächen 16 sind als zweite vorgesehene Merkmale in dem in der Fig. 4 gezeigten Einspannzustand jeweils einer Positionsmessung zugänglich, mit deren Hilfe exakte Positionen der ersten vorgesehenen Merkmale festlegbar sind.

Die erfindungsgemäße Einspannvorrichtung erlaubt ferner eine Formgebung der Anlageflächen 71, 72, 73, 74 an den Stegen 20, 22 mittels eines Tellerfräsers.

Die Ausnehmungen 24, 26 sind im nächsten Schritt ebenfalls in dem in den Figuren 4 und 5 dargestellten Einspannzustand der Rohlinge 10 formbar, so dass kein weiterer Umspannvorgang erforderlich ist und nach der Formung der Ausnehmungen 24, 26 zwei fertiggestellte Bremsbackenteile 70 zur Verfügung gestellt werden können.

**Liste der Bezugszeichen**

| | | | |
|---|---|---|---|
| 10 | Rohling | 70 | Bremsbackenteil |
| 12 | Backenteil | 71 | Anlagefläche |
| 14 | Außenfläche | 72 | Anlagefläche |
| 16 | Bremsbelaganlagefläche | 73 | Anlagefläche |
| 18 | Gegenseite | 74 | Anlagefläche |
| 20 | Steg | | |
| 22 | Steg | | |
| 24 | Ausnehmung | | |
| 26 | Ausnehmung | | |
| 28 | Spannvorrichtung (trommelförmig) | | |
| 30 | Innenseite | | |
| 32 | Spannvorrichtung | | |
| 34 | Lehre | | |
| 36 | Prisma | | |
| 38 | Fläche (eben) | | |
| 40 | Grundkörper (erster) | | |
| 42 | Grundkörper (zweiter) | | |
| 44 | Schlitten | | |
| 46 | Basisteil | | |
| 48 | Spannbacken | | |
| 50 | Spannbacken | | |
| 52 | Erstreckungsrichtung | | |
| 54 | Erstreckungsrichtung | | |
| 56 | Verstellrichtung | | |
| 58 | Vertiefung | | |
| 60 | Flankenelement | | |
| 62 | Fläche (spannbackenzugewandt) | | |
| 64 | Raum | | |
| 66 | Breite (Spannbacken) | | |
| 68 | Randbereich (GK) | | |

## Patentansprüche

1. Einspannvorrichtung zur Verwendung bei der Bearbeitung eines Rohlings (10), insbesondere eines Rohlings (10) zur Herstellung eines Bremsbackenteils (70), mit zumindest einem ersten vorgesehenen Merkmal, dessen exakte Lage nur relativ zu einem zweiten vorgesehenen Merkmal des Rohlings (10) festlegbar ist, das an dem einzuspannenden Rohling (10) unbestimmbar ist, umfassend:
zwei Grundkörper (40, 42),
eine Verstelleinrichtung zur linearen Verstellung zumindest eines der zwei Grundkörper (40, 42) in zumindest einer Verstellrichtung (56),
zumindest zwei Spannbacken (48, 50), wobei jeder der Grundkörper (40, 42) mit zumindest einer der zwei Spannbacken (48, 50) ausgestattet ist, und
wobei sich die Spannbacken (48, 50) paarweise in der Verstellrichtung (56) gegenüberstehen und im Wesentlichen eine Erstreckungsrichtung (52, 54) aufweisen, die senkrecht zur Verstellrichtung (56) angeordnet ist,
wobei jede der Spannbacken (48, 50) an jedem der beiden Grundkörper (40, 42) mit einer der Spannbacke (48, 50) zugewandten Fläche (62) des Grundkörpers (40, 42) zumindest einen Raum (64) definiert, der in zumindest einem Betriebszustand zu einer zumindest teilweisen Aufnahme eines spanenden Werkzeugs vorgesehen ist.

2. Einspannvorrichtung nach Anspruch 1, **dadurch gekennzeichnet, dass** jeder der zwei Grundkörper (40, 42) mit zumindest zwei Spannbacken (48, 50) ausgestattet ist, die in einer Richtung senkrecht zur Verstellrichtung (56) und senkrecht zur Erstreckungsrichtung (52, 54) voneinander beabstandet an den Grundkörpern (40, 42) angeordnet sind.

3. Einspannvorrichtung nach Anspruch 1 oder 2, **dadurch gekennzeichnet, dass** die Spannbacken (48, 50) einstückig an dem Grundkörper (40, 42) angeformt sind.

4. Einspannvorrichtung nach einem der vorhergehenden Ansprüche, **dadurch gekennzeichnet, dass** die Spannbacken (48, 50) in der Richtung senkrecht zur Verstellrichtung (56) und senkrecht zur Erstreckungsrichtung (52, 54) eine Breite aufweisen, die weniger als 20 % einer Breite des Grundkörpers (40, 42) in dieser Richtung beträgt.

5. Einspannvorrichtung nach einem der vorhergehenden Ansprüche, **dadurch gekennzeichnet, dass** eine Abmessung des definierten Raums (64) in der Verstellrichtung (56) mindestens 15 mm beträgt.

6. Einspannvorrichtung nach einem der vorhergehenden Ansprüche, **dadurch gekennzeichnet, dass** die Spannbacken (48, 50) jeweils zumindest eine Vertiefung (58) mit zumindest einem Flankenelement (60) aufweisen, das zumindest eine Anlagefläche zur Anlage des Rohlings (10) ausbildet.

7. Einspannvorrichtung nach einem der vorhergehenden Ansprüche, **dadurch gekennzeichnet, dass** die Spannbacken (48, 50) innerhalb eines Randbereichs (68) des Grundkörpers angeordnet sind.

8. Einspannvorrichtung nach einem der vorhergehenden Ansprüche, **dadurch gekennzeichnet, dass** die Grundkörper (40, 42) zur Verwendung mit einer hydraulischen oder pneumatischen Festlegevorrichtung geeignet sind.

9. Verfahren zur Bearbeitung eines Rohlings (10), insbesondere eines Rohlings (10) zur Herstellung eines Bremsbackenteils (70), mit zumindest einem ersten Merkmal, dessen exakte Lage nur relativ zu einem zweiten Merkmal festlegbar ist, das an dem einzuspannenden Rohling (10) unbestimmbar ist, wobei der Rohling (10) in einer Einspannvorrichtung nach einem der Ansprüche 1 bis 8 eingespannt wird, zumindest die folgenden Schritte umfassend:
- Einspannen des Rohlings (10) zwischen den Spannbacken (48, 50) der Grundkörper (40, 42)
- Bearbeitung des Rohlings (10) zum Zweck einer Formgebung des zweiten Merkmals
- Festlegung der exakten Lage des ersten Merkmals relativ zum zweiten Merkmal
- Bearbeitung des Rohlings (10) zum Zweck einer Formung des ersten Merkmals unter Verwendung der festgelegten exakten Lage des zweiten Merkmals
- Ausspannen des bearbeiteten Rohlings (10) aus der Einspannvorrichtung.
